# EUROPÄISCHE PATENTSCHRIFT

(11) **EP 2 621 753 B1**
(45) Veröffentlichungstag und Bekanntmachung des Hinweises auf die Patenterteilung: **02.05.2018**
(21) Anmeldenummer: 11766958.0
(22) Anmeldetag: 29.09.2011
(51) Int. Cl.: B60M 1/26

(54) **ÜBERWACHUNGSEINRICHTUNG FÜR EIN KETTENWERK EINER OBERLEITUNGSANLAGE**
MONITORING DEVICE FOR A CATENARY SYSTEM OF AN OVERHEAD LINE INSTALLATION
DISPOSITIF DE SURVEILLANCE POUR UNE SUSPENSION CATÉNAIRE D'UN SYSTÈME CATÉNAIRE

(30) Priorität: 30.09.2010 DE 102010041715
(43) Veröffentlichungstag der Anmeldung: 07.08.2013
(73) Patentinhaber: Siemens Aktiengesellschaft, 80333 München (DE)
(72) Erfinder: DÖLLING, Andre, 91056 Erlangen (DE); ZETTNER, Jürgen, 90587 Veitsbronn (DE); KLOS, Hans-Henning, 90475 Nürnberg (DE)
(86) Internationale Anmeldenummer: PCT/EP2011/067017
(87) Internationale Veröffentlichungsnummer: WO 2012/041977

(56) Entgegenhaltungen:
- WO-A1-95/21389
- WO-A1-2010/009913
- DE-A1- 19 842 248
- DE-A1-102008 032 994
- ES-A1- 2 164 517

## Beschreibung

Die Erfindung betrifft eine Überwachungseinrichtung für ein Kettenwerk einer Oberleitungsanlage mit einem von einem Tragseil gehaltenen Fahrdraht zur Energieeinspeisung in ein elektrisches Triebfahrzeug, welche die im Oberbegriff des Patentanspruches 1 angegebenen Merkmale aufweist.

Beim Betrieb elektrischer Bahnen genießen Sicherheit und Verfügbarkeit der Anlagen höchste Priorität. Dies gilt insbesondere für Oberleitungsanlagen als wesentlicher Bestandteil der Traktionsversorgung elektrischer Triebfahrzeuge. Eine Beschädigung des Fahrdrahtes zieht in der Regel einen Ausfall der Oberleitungsanlage zumindest auf dem betroffenen Streckenabschnitt, im schlimmsten Fall auch der Bahnenergieversorgung, nach sich.

Eine Oberleitungsanlage unterliegt einerseits dauernden mechanischen Betriebslasten durch schleifende Stromabnehmer der Triebfahrzeuge und durch die Abspannkräfte. Andererseits unterliegt sie dem Verschleiß durch nicht optimal geführte oder abgenutzte Stromabnehmer, durch Lichtbögen und durch Entladungen oder auch mechanischem Verschleiß. Während der Befahrung treten wechselnde dynamische Lasten in der Oberleitung auf. Insbesondere die wechselnden thermischen Belastungen durch die Betriebsströme in der Oberleitung und die Umgebungsbedingungen beeinflussen die Dauerbetriebsfestigkeit und damit die Lebensdauer erheblich.

Es sind daher unterschiedliche Vorrichtungen und Verfahren bekannt, das Kettenwerk einer Oberleitungsanlage, insbesondere dessen Fahrdraht, auf schädigende Ereignisse zu überwachen, um Ausfälle vermeiden oder ein bereits eingetretenes Schadensereignis im ausgedehnten Oberleitungsnetz möglichst genau lokalisieren zu können.

So ist aus der Offenlegungsschrift DE 10 2007 015 576 A1 ein System und ein Verfahren zur Überwachung eines Fahrdrahtes bekannt, wobei eine Überwachungsleitung entlang eines zur elektrischen Versorgung eines Schienenfahrzeugs dienenden Fahrdrahtes aufgespannt ist. Mit der Überwachungsleitung ist eine Auswertungseinrichtung gekoppelt. Die Überwachungsleitung ist derart mechanisch mit dem Fahrdraht gekoppelt, dass bei einem Bruch des Fahrdrahtes die Überwachungsleitung zusammen mit dem Fahrdraht bricht. Die Auswerteeinrichtung ist ausgebildet, den Bruch der Überwachungsleitung zu erfassen. Dieses Überwachungssystem erfordert einen erheblichen Aufwand durch die Verlegung der Überwachungsleitung über den gesamten Überwachungsbereich. Es vermag zwar zuverlässig einen Bruch eines Fahrdrahtes erkennen, wird aber im Schadensfall zerstört und muss daraufhin erneuert werden. Außerdem kann das Überwachungssystem andere schädigende Ereignisse als Brüche nicht erfassen.

Zerstörungsfrei arbeitet dagegen eine aus der Offenlegungsschrift DE 10 2006 031 919 A1 bekannte akustische Einrichtung zur Untersuchung eines Fahrdrahtes einer zur elektrischen DC-Energieversorgung eines Schienentriebfahrzeugs bestimmten Oberleitung. Die Einrichtung ist mit mindestens einer Sende-/Empfangseinheit zur Ultraschallstrahlung ausgeführt, die wenigstens einen Ultraschallwandler aufweist. Der Ultraschallwandler sendet mindestens einen Ultraschallpuls in den Fahrdraht aus und empfängt einen vom Fahrdraht reflektierten Anteil des Ultraschallpulses. Als ultraschalldurchlässiges Kopplungsmittel zwischen Ultraschallwandler und Fahrdraht ist ein Schmiermittel vorgesehen, mit dem der Fahrdraht zur Minderung des Verschleißes beim Befahren durch einen Stromabnehmer versehen ist. Diese Untersuchungseinrichtung erkennt Materialschäden, wie beispielsweise Risse, Fehlstellen und andere Anomalien im Fahrdraht. Durch die Anordnung der Untersuchungseinrichtung auf einem Wartungsfahrzeug, welches das Schmiermittel aufträgt, kann der komplette Fahrdraht nicht in Echtzeit überwacht werden, da immer nur die gerade durch den Ultraschallwandler abgetastete Fahrdrahtstelle geprüft wird.

Zur Erkennung eines Fahrdrahtbruches ist die Untersuchungseinrichtung nicht einsetzbar. Nachteilig ist auch der erforderliche Betrieb einer Vielzahl an mit der Untersuchungseinrichtung ausgestatteten Wartungsfahrzeugen.

Die internationale Veröffentlichung WO 2008/095739 A1 offenbart eine Vorrichtung zum Erkennen eines mechanischen Defekts in einem Draht einer Oberleitung. Hierzu ist eine Einrichtung zur Bestimmung der Zugkraft des Drahtes vorgesehen, die mit dem Draht und einem Stützpunkt in Verbindung steht. Die Einrichtung kann als Kraftmessdose zwischen dem Draht und einem Spannrad, als Drehwinkelmesser einer das Spannrad tragenden Wippe oder als Positionsmesser eines am Spannrad hängenden Gewichtskörpers ausgebildet sein. Eine Änderung der Zugkraft des Fahrdrahtes kann durch dessen temperaturbedingte Längswanderung, durch dessen Anhub bei Befahrungen, durch Zusatzlasten im Kettenwerk oder durch einen Leiterriss bedingt sein. Die Einrichtung ist mit einer Auswerteeinrichtung verbunden, welche die Zugkraft mit einem Sollwert vergleicht und bei Unterschreiten des Sollwertes einen mechanischen Defekt anzeigt, insbesondere schon bevor der Fahrdraht gerissen ist. Allerdings sind auch durch diese Vorrichtung fortschreitende Schädigungen, wie sie etwa durch Lichtbodenbildungen oder Blitzschläge bedingt sein können, nicht erfassbar.

Der Erfindung liegt daher die Aufgabe zugrunde, eine Überwachungseinrichtung der eingangs genannten Art bereitzustellen, mit der kostengünstig in Echtzeit der Zustand einer Oberleitungsanlage hinsichtlich einer Vielzahl möglicher schädigender Ereignisse überwacht werden kann.

Die Aufgabe wird gelöst durch eine gattungsgemäße Überwachungseinrichtung mit den im kennzeichnenden Teil des Patentanspruches 1 angegebenen Merkmalen. Demnach ist die wenigstens eine Sensoreinheit als elektroakustischer Wandler ausgebildet, der akustisch mit dem Fahrdraht gekoppelt ist, um ein von einem schädigenden Ereignis verursachtes akustisches Signal in ein elektrisches Signal umzuwandeln. Die Erfindung geht dabei davon aus, dass ein schädigendes Ereignis im Kettenwerk der Oberleitungsanlage akustisch erfassbar ist. Die Erfindung macht sich zunutze, dass Schädigungsvorgänge wie Rissbildung, Rissreibung, plastische Verformung, Korrosion, Verschleiß in einem Gleit- oder Wälzlager, aber auch auftretende Teilentladungen und Lichtbögen mit Materialabtrag bei Zugdurchfahrt messbare elastische Schwingungsmoden im Fahrdraht anregen, die sich im Kettenwerk als longitudinale und transversale Schallwellen ausbreiten. Dies ist sogar bereits bei im Entstehen befindlichen Materialschädigungen der Fall, etwa beim Auftreten und Wachsen von Mikrorissen und mikrokristallinen Vorgängen an Versetzungen. Diese können im Normalbetrieb durch Einwirken von mechanischen Lasten, Temperaturwechselbeanspruchungen, Windlasten und Fremdkörpern entstehen und produzieren akustische Stoßereignisse, anhand deren wiederholten Erfassung sogar ein Fortschreiten einer Schädigung feststellbar ist. Das akustische Signal wird von einem elektroakustischen Wandler in ein auswertbares elektrisches Signal umgewandelt. Als Schallwandler eignen sich beispielsweise piezokeramische Materialien, Mikrosysteme oder auch Laservibrometer, welche zur permanenten Kopplung stationär mit der Oberleitungsanlage verbunden sind. Mittels einer geeigneten Auswertungseinheit werden die erfassten elektrischen Signale analysiert.

In der erfindungsgemäßen Überwachungseinrichtung ist wenigstens ein Wandler über eine Nachspanneinrichtung des Kettenwerks mit dem Fahrdraht gekoppelt. Aufgrund der guten akustischen Kopplung mit dem Fahrdraht eignet sich als Befestigungsstelle für den wenigstens einen Wandler ein Radspanner zum Nachspannen des Fahrdrahtes. Durch das üblicherweise bei Oberleitungsanlagen verwendete Kettenwerk aus Fahrdraht, Tragseil, Hängern, Beiseilen und Stromverbindern kann der wenigstens eine Wandler auch mit dem Radspanner für das Tragseil verbunden sein, da durch ein schädigendes Ereignis im Fahrdraht ausgelöste akustische Wellen auch durch das Tragseil transportiert werden. Durch die im Tragseil gegebenenfalls vorliegende geringere Dämpfung
akustischer Wellen, kann dies bei einem Signaltransport über lange Strecken sogar von Vorteil sein.

Vorzugsweise weist die Nachspanneinrichtung wenigstens ein Spannrad auf, um welches ein mit dem Fahrdraht und/oder dem Tragseil verbundenes Spannseil und dazu gegenläufig ein mit Spanngewichten verbundenes Gewichtsseil aufgewickelt ist, wobei der wenigstens eine Wandler der erfindungsgemäßen Überwachungseinrichtung über eine Drehachse des wenigstens einen Spannrades mit dem Fahrdraht gekoppelt ist. Hierdurch ist einerseits eine gute mechanische Kopplung mit geringer Schwingungsdämpfung gegeben, andererseits wird keine merkliche Kraft auf das Spannrad ausgeübt, so dass keine Funktionsbeeinträchtigung der Nachspanneinrichtung zu erwarten ist.

In einer bevorzugten Ausgestaltung der erfindungsgemäßen Überwachungseinrichtung ist im Kettenwerk zwischen Spannrad und Fahrdraht ein elektrischer Isolator angeordnet, der einen akustisch leitenden Isolierkern aufweist. Zwischen dem Radspanner und dem Fahrdraht befindet sich praktisch immer ein elektrischer Isolator, der je nach geometrischem und mechanischem Aufbau der Isolatorstrecke den Körperschall mehr oder weniger stark dämpfen kann. Gute akustische Leitereigenschaften haben dabei Isolatoren mit silikonummantelten Glasfaserstäben, da der relativ spröde Glasfaserkern keine allzu große akustische Dämpfung aufweist. Da sich in diesem Falle der gesamte elektroakustische Wandler auf Massepotential befindet, kann mit Vorteil eine besonders kostengünstige Überwachungseinrichtung realisiert werden.

In einer anderen bevorzugten Ausgestaltung der erfindungsgemäßen Überwachungseinrichtung ist der Wandler über ein elektrisch isolierendes Kopplungsmittel mit der Drehachse verbunden ist. Auf diese Weise kann eine Potentialtrennung über die Ausbildung der Kopplungsschnittstelle zwischen Wandler und Drehachse des Spannrades realisiert werden. Vorzugsweise kann die Potentialtrennung auch über eine faseroptische Verbindung zwischen Spannrad und Wandler erfolgen.

In einer vorteilhaften Ausgestaltung umfasst die erfindungsgemäße Überwachungseinrichtung Kommunikationsmittel zur drahtlosen Signalübertragung von dem wenigstens einen Wandler zur Auswertungseinheit. Hierbei kann ein kostengünstiger Wandler mit autarker Energieversorgung über eine Funkverbindung mit der Auswertungseinrichtung verbunden sein und sich auf dem elektrischen Potential des Fahrdrahtes befinden. Diese Ausgestaltung ist besonders kostengünstig, da die Kommunikations- und Vorverarbeitungsintelligenz auf dem Mikrocontroller des Funkknotens untergebracht werden kann. Es müssten nur höherwertige Aussagen, etwa Watchdog, Sensordiagnose sowie Eintritt, Häufigkeit und Stärke eines Ereignisses, übermittelt werden, was eine energieeffiziente Arbeitsweise erlaubt, die über Solarzellen aus dem Umgebungslicht versorgt werden kann. Ein Vorteil dieser Ausgestaltung besteht außerdem darin, dass der Körperschall ohne Dämpfung durch eine elektrische Isolationsschicht gemessen werden kann.

In einer bevorzugten Ausführungsform der erfindungsgemäßen Überwachungseinrichtung sind wenigstens zwei Wandler an bestimmten Positionen akustisch mit dem Kettenwerk gekoppelt und die Auswertungseinrichtung ist dazu ausgebildet, aus den Positionen der Wandler im Kettenwerk und aus einer gemessenen Laufzeitdifferenz der beiden von den Wandlern empfangenen akustischen Signale das schädigende Ereignis zu orten. Als Überwachungsbereich kommt typischerweise ein Spannabschnitt des Kettenwerkes in Betracht. Bei einer Schallgeschwindigkeit in Stahl von 5000 m/s beträgt die Laufzeit eines akustischen Signals auf einer halben Abspannlänge von höchstens 1000 m etwa 0,2 s. Bei einer zeitlichen Auflösung von mindestens 1 ms, also einer Abtastrate von 1 kHz, kann mittels einer Analyse von Laufzeitdifferenzen des Körperschalls zu je zwei der Wandler der Ort des schädigenden Ereignisses immerhin schon auf 5 bis 10 m genau lokalisiert werden. Die akustischen Laufzeiten bewegen sich hierbei um 0,2 ms je Meter Drahtlänge und es sollen Ortungen in der Größenordnung von 100 m ermöglicht werden, was durch eine kostengünstige Wandler- und Auswertungselektronik mit einer Abtastrate von etwa 1 ms erreichbar ist. Hierzu kann mit Vorteil ein Netzwerk von elektroakustischen Wandlern mit Kreuzkorrelation zwischen zwei Funkknoten Anwendung finden, wobei zum Beispiel ein Wandler an eine Absolutzeitgebung der Auswertungseinrichtung angebunden ist, während der entfernte, per Funk kommunizierende Wandler die elektrischen Signale zu gewissen Triggerzeitpunkten erfasst und übermittelt. Zur Schädigungserfassung ist es vorteilhaft, einen Wandler pro Abspannabschnitt und bei Laufzeiterfassung zwei Wandler pro Abspannabschnitt vorzusehen, denn der Verlustfaktor verwendeter Materialien wie Kupfer, Aluminium oder Stahl liegt im Bereich von 10⁻³ bis 10⁻⁴ und lässt auch bedingt durch die Geometrie eine hohe Detektionsreichweite für akustische Leitungen durch geringe Dämpfung zu. Die Überwachungseinrichtung kann mit Vorteil auch mit aus dem Stand der Technik bekannten Einrichtungen zur Überwachung des Fahrdrahtes kombiniert werden, um eine höher qualifizierte Auswertung schädigender Ereignisse zu ermöglichen.

In einer weiteren vorteilhaften Ausführungsform der erfindungsgemäßen Überwachungseinrichtung ist die Auswertungseinrichtung dazu ausgebildet, mittels einer Signalanalyse der empfangenen akustischen Signale das schädigende Ereignis zu klassifizieren. Geht man davon aus, dass sich verschiedene schädigende Ereignisse auch in ihren akustischen Signalen unterscheiden, beispielsweise in Signaldauer, in Anstieg, Maximum und Abklingen der Signalamplitude oder auch in ihren Zusammensetzungen aus Einzelsignalen, kann durch eine Frequenzanalyse der gewandelten elektrischen Signale eine Zuordnung in verschiedene Klassen schädigender Ereignisse möglich sein. Hierdurch gewinnt die Signalauswertung in qualitativer Hinsicht, und es können vom Betreiber der überwachten Oberleitungsanlage gezielte Maßnahmen zur Wartung beziehungsweise Störungsbehebung eingeleitet werden.

Weitere Eigenschaften und Vorteile der erfindungsgemäßen Überwachungseinrichtung ergeben sich aus dem nachfolgend anhand von Zeichnungen beschriebenen Ausführungsbeispiel, in deren
- FIG 1: ein Kettenwerk einer Oberleitungsanlage mit der erfindungsgemäßen Überwachungseinrichtung,
- FIG 2: eine Nachspanneinrichtung mit einem erfindungsgemäßen elektroakustischen Wandler,
- FIG 3: eine von einer erfindungsgemäßen Auswertungseinrichtung erzeugte grafische Darstellung des zeitlichen Amplitudenverlaufs von in den Wandlern empfangenen Signalen
schematisch veranschaulicht werden.

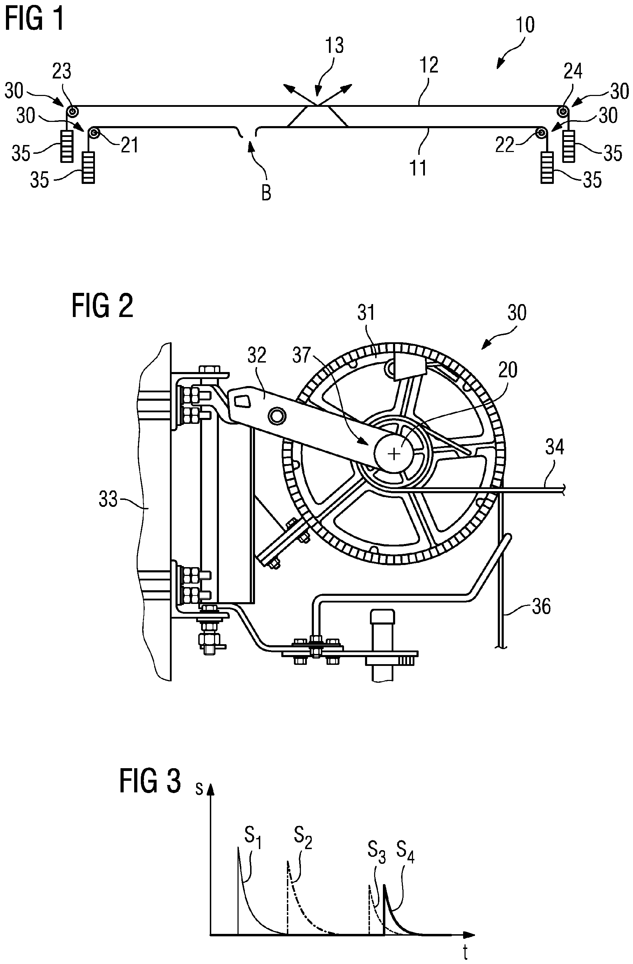

Gemäß FIG 1 ist ein Kettenwerk 10 einer Oberleitungsanlage zur Traktionsversorgung elektrischer Triebfahrzeuge in hintereinander angeordnete Spannabschnitte unterteilt. Das Kettenwerk 10 weist einen Fahrdraht 11 auf, der beim Befahren durch ein Triebfahrzeug zur Energieeinspeisung unter Betriebsspannung gesetzt und durch einen Stromabnehmer des Triebfahrzeuges beschliffen wird. Der Fahrdraht 11 wird von einem oberhalb des Fahrdrahtes 11 verlaufenden Tragseil 12 über nicht dargestellte Hängerseile gehalten. Das Tragseil 12 ist wiederum an einer Reihe von seitlich einer Fahrbahn aufgestellten Masten über nicht dargestellte Seitenhalter über der Fahrbahn aufgehängt. In der Feldmitte eines Spannabschnittes sind der Fahrdraht 11 und das Tragseil 12 über Beiseile längsfixiert, während sie an ihren Enden über Nachspanneinrichtungen 30 gespannt werden. Die Nachspanneinrichtungen 30 sind typischerweise als sogenannten Radspanner ausgebildet, welche eine durch eine frei hängende Säule an Spanngewichten 35 erzeugte Gewichtskraft mit einem vorgebbaren Übersetzungsverhältnis von beispielsweise 3 : 1 als Spannkraft in das Kettenwerkes 10 einprägen. Im dargestellten Ausführungsbeispiel sind Fahrdraht 11 und Tragseil 12 jeweils getrennt voneinander abgespannt, es ist aber auch möglich, diese über einen Spannhebel gemeinsam abzuspannen. Von dem Fixpunkt 13 in Feldmitte werden betriebs- und insbesondere temperaturbedingte Längswanderungen des Kettenwerkes 10 über die Nachspanneinrichtungen 30 ausgeglichen, um gleichbleibende Befahrungseigenschaften zu erreichen.

Gemäß FIG 2 weist eine als Radspanner ausgebildete Nachspanneinrichtung 30 ein Spannrad 31 mit zwei Trommeln unterschiedlich großer Durchmesser auf. Das Spannrad 31 weist eine Drehachse 37 auf, die an einem Ende einer Wippe 32 der Nachspanneinrichtung 30 drehbar gelagert ist. An ihrem anderen Ende ist die Wippe 32 um eine horizontale Achse drehbar und um eine vertikale Achse schwenkbar gelenkig an einem Mast 33 befestigt. Um die kleinere Trommel des Spannrades 31 ist ein Spannseil 34 gewickelt, das mit dem Fahrdraht 11 beziehungsweise mit dem Tragseil 12 verbunden ist. Die Spannkraft im Spannseil 34 wird von einer Gewichtskraft von Spanngewichten 35 erzeugt, welche an einem um die größere Trommel des Spannrades 31 und gegenläufig zum Spannseil 34 gewickelten Gewichtsseil 36 hängen. Im normalen Betriebszustand nimmt die Nachspanneinrichtung 30 eine Gleichgewichtslage ein, aus der in das Kettenwerk 10 eingeprägte Kräfte, Schwingungen und Längsbewegungen durch Dreh- und Wippbewegungen des Spannrades 31 ausgeglichen werden.

Die Drehachse 37 des Spannrades 31 ist dabei mechanisch fast ungedämpft mit dem Kettenwerk 10, insbesondere mit dem Fahrdraht 11, gekoppelt, so dass sich im Kettenwerk 10 ausbreitende elastische Wellen sehr gut auf die Drehachse 37 übertragen werden. Nach der Erfindung ist daher gemäß FIG 2 eine als elektroakustischer Wandler 20 ausgebildete Sensoreinheit über die Drehachse 37 eines Spannrades 31 akustisch mit dem Fahrdraht 11 gekoppelt. Äquivalente vorteilhafte Lösungen verwenden eine Montage des Wandlers 20 direkt auf dem Spannrad 31 oder auf benachbarten Tragelementen wie der Wippe 32 oder am Mast 33. Der elektroakustische Wandler 20 ist dazu vorgesehen, ein von einem schädigenden Ereignis, etwa einem Bruch B des Fahrdrahtes 11, verursachtes akustisches Signal in ein elektrisches Signal umzuwandeln. Zur elektroakustischen Signalwandlung kann die an sich bekannte Sensoreinheit 20 ein piezokeramisches Material, ein Mikrosystem oder aber eine optische Messeinrichtung - etwa einen Laser - aufweisen. Zur Verwirklichung einer kostengünstigen Überwachungseinrichtung kann der Wandler 20 auf dem elektrischen Potential des Fahrdrahtes 11 liegen. Hierdurch kann auf eine elektrisch isolierende Kopplungsschicht zwischen Drehachse 37 und Wandler 20 verzichtet werden kann, so dass die elastischen Wellen des Körperschalls ohne Dämpfung durch eine solche Materialschicht in den Wandler 20 einkoppeln können.

Gemäß FIG 1 sind die Nachspanneinrichtungen 30 an beiden Enden des Fahrdrahtes 11 mit elektroakustischen Wandlern 21 bzw. 22 versehen. Hierdurch werden elektrische Signale S₁ bzw. S₂, die auf dasselbe schädigende Ereignis zurückgehen, an zwei verschiedenen Positionen im Kettenwerk 10 erfasst. Die zugrunde liegenden akustischen Signale legen dabei unterschiedliche Wege vom Ort des schädigenden Ereignisses bis zur jeweiligen Wandlerposition zurück, wofür sie unterschiedliche Laufzeiten benötigen. In einer nicht dargestellten Auswertungseinheit werden die elektrischen Signale S₁ bzw. S₂ der Wandler 21 bzw. 22 analysiert und mittels einer Laufzeitanalyse der Ort des schädigenden Ereignisses im Kettenwerk 10 bestimmt. Der Auswertung liegt das Hyperbelschnittverfahren zugrunde, wobei sich die akustischen Laufzeiten im Bereich von 0,2 ms je Meter Drahtlänge bewegen, so dass Ortungen mit einer Genauigkeit von 100 m durch eine kostengünstige Wandler- und Auswertungselektronik bei einer Abtastrate von etwa 1 ms erreichbar sind.

Die Überwachungseinrichtung umfasst nicht dargestellte Kommunikationsmittel zur drahtlosen Signalübertragung von einem Wandler 21 bzw. 22 zur Auswertungseinheit. Die Wandler 21 bzw. 22 können dabei als kostengünstige, energieautarke Sensoreinheiten ausgebildet sein, die über Solarzellen aus dem Umgebungslicht versorgt werden. Die Kommunikations- und Vorverarbeitungsintelligenz ist dabei auf einem Mikrocontroller des Funkknotens untergebracht. Es müssen nur höherwertige Aussagen, etwa Watchdog, Sensordiagnose sowie Eintritt, Häufigkeit und Stärke eines Ereignisses, übermittelt werden, was eine energieeffiziente Arbeitsweise erlaubt. Bei einem Netzwerk von elektroakustischen Wandlern 21 bzw. 22 mit Kreuzkorrelation zwischen zwei Funkknoten kann zum Beispiel ein Wandler 21 an eine Absolutzeitgebung der Auswertungseinrichtung angebunden sein, während der entfernte, per Funk kommunizierende Wandler 22 die elektrischen Signale S₂ zu gewissen Triggerzeitpunkten erfasst und übermittelt.

Ist im Kettenwerk 10 zwischen Spannrad 31 und Fahrdraht 11 ein elektrischer Isolator angeordnet, der hier nicht dargestellt ist, wird dieser mit einem akustisch leitenden Isolierkern ausgestattet. Um die Dämpfung des akustischen Signals möglichst gering zu halten, werden Isolatoren mit silikonummantelten Glasfaserstäben eingesetzt. Der relativ spröde Glasfaserkern weist keine allzu große akustische Dämpfung auf. Aufgrund der guten akustischen Leitfähigkeit bekannter Kettenwerke 10 können die elektroakustischen Wandler 23 bzw. 24 auch mit den Nachspanneinrichtungen 30 für das Tragseil 12 verbunden sein, da durch ein schädigendes Ereignis B im Fahrdraht 11 ausgelöste akustische Wellen auch durch das Tragseil 12 transportiert werden. Im Tragseil 12 kann eine geringere Dämpfung für akustische Wellen als im Fahrdraht 11 vorliegen, so dass diese Anordnung für einen Signaltransport über lange Strecken sehr vorteilhaft ist.

FIG 3 zeigt beispielhaft einen Verlauf der Signalamplituden s von in einer Auswertungseinheit zu analysierenden Signalen S₁, S₂, S₃, S₄ über die Zeit t. Neben den Laufzeiten bzw. deren Differenzen zur Lokalisierung eines schädigenden Ereignisses können die Signale mittels Frequenzanalyse zur Klassifizierung des schädigenden Ereignisses ausgewertet werden.

Insgesamt setzt die Erfindung mit Gewinn das Prinzip der Schallemissionsanalyse zur Detektion und Ortung von akustischen Schädigungsereignissen bei Durchfahrt eines elektrischen Triebfahrzeuges ein, welches beispielsweise einen unverhältnismäßig stark abgenutzten Stromabnehmer aufweist oder Schadenstellen im Fahrdraht überfährt. Es können allerdings auch fortschreitende Schädigungen durch Fehlstellenbildung im Kettenwerk 10 durch Lichtbogenbildung oder Blitzeinschlag erfasst werden.

## Patentansprüche

1. Überwachungseinrichtung für ein Kettenwerk (10) einer Oberleitungsanlage mit einem von einem Tragseil (12) gehaltenen Fahrdraht (11) zur Energieeinspeisung in ein elektrisches Triebfahrzeug, umfassend wenigstens eine Sensoreinheit zur Erfassung eines durch ein schädigendes Ereignis (B) im Kettenwerk (10), insbesondere im Fahrdraht (11), ausgelöstes Signal, welche stationär mit der Oberleitungsanlage verbunden ist, und eine Auswertungseinheit zur Analyse des Signals, wobei die wenigstens eine Sensoreinheit als elektroakustischer Wandler (20, 21, 22, 23, 24) ausgebildet ist, der akustisch mit dem Fahrdraht (11) gekoppelt ist, um ein von einem schädigenden Ereignis (B) verursachtes akustisches Signal in ein elektrisches Signal (S₁, S₂, S₃, S₄) umzuwandeln,
**dadurch gekennzeichnet, dass** wenigstens ein Wandler (20, 21, 22, 23, 24) über eine Nachspanneinrichtung (30) des Kettenwerks (10) mit dem Fahrdraht (11) gekoppelt ist.

2. Überwachungseinrichtung nach Anspruch 1,
wobei die Nachspanneinrichtung (30) wenigstens ein Spannrad (31) aufweist, um welches ein mit dem Fahrdraht (11) und/oder dem Tragseil (12) verbundenes Spannseil (34) und dazu gegenläufig ein mit Spanngewichten (35) verbundenes Gewichtsseil (36) aufgewickelt ist, und der wenigstens eine Wandler (20, 21, 22, 23, 24) über eine Drehachse (37) des wenigstens einen Spannrades (31) mit dem Fahrdraht (11) gekoppelt ist.

3. Überwachungseinrichtung nach Anspruch 2,
wobei im Kettenwerk (10) zwischen Spannrad (31) und Fahrdraht (11) ein elektrischer Isolator angeordnet ist, der einen akustisch leitenden Isolierkern aufweist.

4. Überwachungseinrichtung nach Anspruch 2,
wobei der Wandler (20, 21, 22, 23, 24) über ein elektrisch isolierendes Kopplungsmittel mit der Drehachse (37) verbunden ist.

5. Überwachungseinrichtung nach einem der Ansprüche 1 bis 4, umfassend Kommunikationsmittel zur drahtlosen Signalübertragung von dem wenigstens einen Wandler (20, 21, 22, 23, 24) zur Auswertungseinheit.

6. Überwachungseinrichtung nach einem der Ansprüche 1 bis 5, wobei wenigstens zwei Wandler (20, 21, 22, 23, 24) an bestimmten Positionen akustisch mit dem Kettenwerk (10) gekoppelt sind und die Auswertungseinrichtung dazu ausgebildet ist, aus den Positionen der Wandler (20, 21, 22, 23, 24) im Kettenwerk (10) und aus einer gemessenen Laufzeitdifferenz der beiden von den Wandlern (20, 21, 22, 23, 24) empfangenen akustischen Signale (S₁, S₂, S₃, S₄) das schädigende Ereignis (B) zu orten.

7. Überwachungseinrichtung nach einem der Ansprüche 1 bis 6, wobei die Auswertungseinrichtung dazu ausgebildet ist, mittels einer Signalanalyse der empfangenen akustischen Signale (S₁, S₂, S₃, S₄) das schädigende Ereignis (B) zu klassifizieren.

## Claims

1. Monitoring device for a catenary system (10) of an overhead line installation with a contact wire (11) retained by a carrying cable (12) to feed energy to an electric locomotive, comprising at least one sensor unit for detecting a signal triggered by a damaging event (B) in the catenary (10), in particular in the contact wire (11), which sensor unit is connected to the overhead line installation in a stationary manner, and an evaluation unit for analysing the signal, wherein the at least one sensor unit is embodied as an electroacoustic converter (20, 21, 22, 23, 24), which is acoustically connected to the contact wire (11) in order to convert an acoustic signal caused by a damaging event (B) into an electric signal S₂, S₃, S₄),
**characterised in that** at least one converter (20, 21, 22, 23, 24) is coupled to the contact wire (11) via a tensioning device (30) of the catenary (10).

2. Monitoring device according to claim 1,
wherein the retensioning device (30) has at least one tension wheel (31), around which a tension cable (34) connected to the contact wire (11) and/or the carrying cable (12) and, in the opposite direction, a weight cable (36) connected to tension weights (35) are wound, and the at least one converter (20, 21, 22, 23, 24) is coupled to the contact wire (11) via an axis of rotation (37) of the at least one tension wheel (31).

3. Monitoring device according to claim 2,
wherein an electrical insulator, which has an acoustically conductive insulating core, is arranged in the catenary (10) between the tension wheel (31) and contact wire (11).

4. Monitoring device according to claim 2,
wherein the converter (20, 21, 22, 23, 24) is connected to the axis of rotation (37) via an electrically insulating coupling means.

5. Monitoring device according to one of claims 1 to 4, comprising communication means for wireless signal transmission from the at least one converter (20, 21, 22, 23, 24) to the evaluation unit.

6. Monitoring device according to one of claims 1 to 5, wherein at least two converters (20, 21, 22, 23, 24) are acoustically coupled to the catenary (10) at particular positions and the evaluation device is embodied to locate the damaging event (B) from the positions of the converters (20, 21, 22, 23, 24) in the catenary (10) and from a measured difference in the propagation times of the two acoustic signals S₂, S₃, S₄) received by the converter (20, 21, 22, 23, 24).

7. Monitoring device according to one of claims 1 to 6, wherein the evaluation device is embodied to classify the damaging event (B) by means of a signal analysis of the received acoustic signals S₂, S₃, S₄).

## Revendications

1. Dispositif de contrôle d'une suspension (10) caténaire d'une installation de ligne de contact ayant un fil (11) de contact maintenu par un câble (12) porteur pour injecter de l'énergie dans un véhicule moteur électrique, comprenant au moins une unité de capteur pour détecter un signal déclenché par un évènement (B) dommageable dans la suspension (10) caténaire, notamment dans le fil (11) de contact, unité qui est reliée de manière fixe à l'installation de ligne de contact, et une unité d'exploitation pour analyser le signal, dans lequel la au moins une unité de capteur est constituée sous la forme d'un transducteur (20, 21, 22, 23, 24) électroacoustique, qui est couplé acoustiquement au fil (11) de contact, pour transformer, en un signal (S₁, S₂, S₃, S₄) électrique, un signal acoustique provoqué par un évènement (B) dommageable,
**caractérisé en ce qu'**
au moins un transducteur (20, 21, 22, 23, 24) est couplé au fil (11) de contact par un dispositif (30) de retension de la suspension (10) caténaire.

2. Dispositif de contrôle suivant la revendication 1,
dans lequel le dispositif (30) de retension a au moins une roue (31) de tension autour de laquelle est enroulé un câble (34) de tension, relié au fil (11) de contact et/ou au câble (12) porteur, et, en sens contraire, un câble (36) à masselotte relié à des masselottes (35) de tension, et le au moins un transducteur (20, 21, 22, 23, 24) est couplé au fil (11) de contact par un axe (37) de rotation de la au moins une roue (31) de tension.

3. Dispositif de contrôle suivant la revendication 2,
dans lequel un isolateur électrique, qui a un noyau isolant, conducteur du point de vue acoustique, est disposé dans la suspension (10) caténaire entre la roue (31) de tension et le fil (11) de contact.

4. Dispositif de contrôle suivant la revendication 2,
dans lequel le transducteur (20, 21, 22, 23, 24) est relié à l'axe (37) de rotation par un moyen de couplage isolant du point de vue électrique.

5. Dispositif de contrôle suivant l'une des revendications 1 à 4,
comprenant des moyens de communication pour la transmission sans fil de signaux du au moins un transducteur (20, 21, 22, 23, 24) à l'unité d'exploitation.

6. Dispositif suivant l'une des revendications 1 à 5,
dans lequel au moins deux transducteurs (20, 21, 22, 23, 24) sont couplés, en des positions déterminées, acoustiquement à la suspension (10) caténaire et le dispositif d'exploitation est constitué pour localiser l'événement (B) dommageable à partir des positions des transducteurs (20, 21, 22, 23, 24) dans la suspension caténaire et à partir d'une différence de temps de propagation mesurée des deux signaux (S₁, S₂, S₃, S₄) acoustiques reçus par les transducteurs (20, 21, 22, 23, 24).

7. Dispositif suivant l'une des revendications 1 à 6,
dans lequel le dispositif d'exploitation est constitué pour catégoriser l'événement (B) dommageable au moyen d'une analyse des signaux (S₁, S₂, S₃, S₄) acoustiques reçus.
